(19) Europäisches Patentamt / European Patent Office / Office européen des brevets

(11) **EP 2 870 674 B1**

(12) **FASCICULE DE BREVET EUROPEEN**

(45) Date de publication et mention de la délivrance du brevet:
**04.10.2017 Bulletin 2017/40**

(51) Int Cl.:
*H02J 7/00* (2006.01)    *B60L 11/18* (2006.01)
*B60W 10/26* (2006.01)

(21) Numéro de dépôt: **13744707.4**

(22) Date de dépôt: **05.07.2013**

(86) Numéro de dépôt international:
**PCT/FR2013/051614**

(87) Numéro de publication internationale:
**WO 2014/006348 (09.01.2014 Gazette 2014/02)**

(54) **SYSTÈME DE GESTION DE LA CHARGE D'UNE BATTERIE ET DU FREINAGE RÉCUPÉRATIF D'UN VÉHICULE ALIMENTÉ AU MOINS EN PARTIE PAR LA BATTERIE ET PROCÉDÉ DE RÉGULATION ASSOCIÉ**

SYSTEM ZUR VERWALTUNG DER LADUNG EINER BATTERIE UND DER REGENERATIVEN BREMSUNG EINES ZUMINDEST TEILWEISE MIT DER BATTERIE BETRIEBENEN FAHRZEUGES UND ZUGEHÖRIGES REGELVERFAHREN

SYSTEM FOR MANAGING THE CHARGING OF A BATTERY AND THE REGENERATIVE BRAKING OF A VEHICLE AT LEAST PARTIALLY POWERED BY THE BATTERY AND ASSOCIATED REGULATION METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.07.2012 FR 1256497**

(43) Date de publication de la demande:
**13.05.2015 Bulletin 2015/20**

(73) Titulaire: Renault S.A.S.
**92100 Boulogne-Billancourt (FR)**

(72) Inventeurs:
• **SAINT-MARCOUX, Antoine**
  **F-91120 Palaiseau (FR)**
• **TRINH, Do-Hieu**
  **F-78330 Fontenay Le Fleury (FR)**
• **LE VOURCH, Yves**
  **F-78150 Le Chesnay (FR)**
• **PEUCHANT, Thomas**
  **F-75014 Paris (FR)**

(56) Documents cités:
**EP-A2- 1 798 100      FR-A1- 2 912 265**
**US-B2- 7 683 579**

## Description

L'invention a pour objet les systèmes de gestion de batterie électrique, et en particulier les systèmes de gestion de batteries électriques embarquées et destinées à propulser un véhicule automobile.

Ces batteries peuvent soit être rechargées sur des bornes électriques lorsque le véhicule est à l'arrêt, soit être rechargées en récupérant, au travers du moteur électrique, une partie de l'énergie cinétique du véhicule lorsque celui décélère. C'est ce qu'on appelle le freinage récupératif.

On peut être amené à limiter la puissance récupérée et renvoyée vers la batterie, par exemple pour ne pas compromettre les fonctionnements de certains systèmes de sécurité tels que l'ABS ou l'ESP, ainsi que le décrit la demande de brevet WO 2008 040893.

On peut également être amené à limiter la puissance renvoyée vers la batterie afin de ne pas endommager celle-ci. Des seuils peuvent alors être imposés pour le courant maximal envoyé vers la batterie, ou pour la tension maximale appliquée aux bornes de la batterie.

De manière classique, une batterie peut être gérée par une unité de commande électronique qui surveille la puissance électrique maximale envoyée vers la batterie. Cette puissance électrique maximale peut ainsi être reliée à une puissance mécanique maximale autorisée en récupération au niveau des roues.

Les limitations basées uniquement sur un seuil de tension ou uniquement sur un seuil d'intensité de courant ne permettent pas de limiter des phénomènes tels que les dépôts métalliques dans des batteries de type lithium ion. Des dépôts de lithium métallique peuvent se produire à l'électrode négative de la batterie, dans certaines conditions de fonctionnement où le flux des ions Li+ arrivant à l'électrode est trop important pour permettre aux ions Li+ de s'insérer au graphite de l'électrode. Ces ions Li+ se regroupent alors sous forme d'un dépôt métallique sur l'électrode, susceptible de créer des courts-circuits internes à la batterie.

La demande de brevet WO 2009 036444 propose de limiter ce risque de dépôt de lithium en intégrant dans chacune des cellules élémentaires de la batterie une électrode de référence, et en surveillant le potentiel de l'électrode négative par rapport à l'électrode de référence, pour qu'il ne passe pas en dessous d'un potentiel seuil de formation du lithium métallique.

Cette solution est onéreuse à appliquer car elle suppose l'insertion d'électrodes de référence dans au moins une partie des cellules de la batterie. Le système peut devenir hors de prix si toutes les cellules sont équipées d'une électrode de référence, et peut ne pas être suffisamment fiable si une partie seulement des cellules sont équipées.

Le brevet US 7 683 579 B2 divulgue un procédé et un dispositif pour contrôler la charge et la décharge d'une batterie. Un inconvénient de cette solution est que le calcul de la puissance maximal y est peu fiable et peut conduire à une dégradation de la batterie par dépôt de métal.

La demande de brevet EP 1 798 100 A2 divulgue quant à elle un système de gestion d'une batterie permettant de piloter la charge et la décharge de la batterie en tenant compte de la température de ses cellules. Cette solution présente des inconvénients similaires à celle du brevet précédent.

L'invention a pour but de proposer un système de gestion des phases de rechargement de la batterie, notamment pendant des phases de freinage récupératif, qui permet de limiter les risques de dépôt de lithium de manière fiable et à moindre coût. L'invention est définie par les caractéristiques des revendications indépendantes 1 et 11. Les modes de réalisations sont définis par les revendications dépendantes.

A cette fin, l'invention propose un système d'alimentation électrique, notamment pour véhicule automobile, comprenant une batterie d'accumulation électrique, la batterie étant composée d'une ou plusieurs cellules la batterie étant équipée d'un ampèremètre apte à mesurer le courant de batterie traversant la batterie, et d'au moins un voltmètre apte à mesurer la tension aux bornes d'une cellule, le système d'alimentation comprenant une unité de commande électronique apte à calculer une puissance électrique maximale admissible lors d'une phase de recharge de la batterie. L'unité de commande est configurée pour calculer une puissance maximale admissible associée à une cellule équipée d'un voltmètre, en imposant à la cellule de rester en dessous d'une tension maximale entre les bornes de la cellule, cette tension étant une fonction décroissante de l'intensité traversant la cellule.

L'invention propose en outre un système d'alimentation électrique, notamment pour véhicule automobile, comprenant une batterie d'accumulation électrique. La batterie est composée d'une ou plusieurs cellules, est équipée d'un ampèremètre apte à mesurer le courant traversant la batterie, et est équipée d'au moins un capteur de tension apte à mesurer la tension aux bornes d'une cellule. Selon une variante de réalisation avantageuse, chaque cellule de la batterie est équipée d'un capteur de tension apte à mesurer la tension aux bornes de la cellule. Un même capteur de tension peut équiper plusieurs cellules branchées en parallèles. Selon un mode de réalisation préférentiel, la tension aux bornes de la cellule correspond à la tension aux bornes d'une cellule électrochimique élémentaire, c'est-à-dire à la différence des potentiels de deux électrodes de la cellule. Le voltmètre peut par exemple être branché aux bornes d'une cellule électrochimique, ou d'un groupe de plusieurs cellules électrochimiques branchées en parallèle les unes par rapport aux autres. Le système d'alimentation comprend une unité de commande électronique apte à calculer une puissance électrique maximale admissible lors d'une phase de recharge de la batterie. L'unité de commande est configurée pour calculer une puissance maximale admissible associée une cellule équipée d'un voltmètre, en prenant le minimum d'au moins deux valeurs, dont une seconde puissance et une première puissance, la seconde puissance étant le produit d'une première tension seuil constante par la somme du courant de batterie et d'un terme qui est fonction de la tension aux bornes de la cellule, et la première puissance étant le produit d'une première fonction, linéaire par rapport au courant de batterie et par rapport à la tension aux bornes de la cellule, et d'une seconde fonction, elle aussi linéaire par rapport au courant de batterie et par rapport à la tension aux bornes de la cellule. Selon un mode de réalisation préféré, l'unité de commande électronique est configurée pour calculer le minimum de la seconde puissance et de la première puissance pour chacune des cellules équipées d'un voltmètre. Selon un mode de réalisation particulièrement avantageux l'unité de commande électronique est configurée pour calculer le minimum de la seconde puissance et de la première puissance pour chacune des cellules de la batterie.

L'unité de commande électronique peut comprendre un calculateur d'état de charge, apte à calculer un état de charge de la cellule, et peut comprendre une cartographie permettant lire, à partir d'une température et de l'état de charge de la cellule, une résistance interne de la cellule. Le terme s'ajoutant au courant de batterie pour le calcul de la seconde puissance est alors inversement proportionnel à la résistance interne de la cellule, et les coefficients de la première et de la seconde fonction linéaire sont fonction de la résistance interne de la cellule. Selon un mode de réalisation préféré, les coefficients de la première et de la seconde fonction linéaire sont calculés sous forme de fractions faisant intervenir la résistance interne de la cellule.

Selon un mode de réalisation particulièrement avantageux, l'unité de commande est en outre apte à imposer à la batterie une puissance qui est le minimum entre :

- la puissance souhaitée par le conducteur,
- la puissance autorisée par la batterie,

De manière à permettre une limitation de la puissance à chaque instant en fonction des limites de la batterie.

Selon un autre mode de réalisation qui peut se combiner aux précédents, on peut calculer à chaque instant une résistance instantanée de la cellule $r^i_{Short\_term\_cell,k+1}$ sous la forme suivante :

$$ r^i_{Short\_term\_cell,k+1} = \frac{V^i_{cell,k+1} - V^i_{cell,k}}{I_{bat,k+1} - I_{bat,k}}. $$

On pourra ensuite calculer une résistance filtrée $r^i_{cell,k+1}$ de la cellule par exemple comme suit :

$$ r^i_{cell,k+1} = \beta \cdot r^i_{Short\_term\_cell,k+1} + (1-\beta) \cdot r^i_{cell,k} $$

où $\beta$ est un coefficient de filtrage constant, par exemple $\beta = 0.01$ et $r^i_{cell,0}$ est la valeur de la résistance interne initiale, calculée à partir d'une cartographie.

On peut notamment décider d'appliquer ce filtrage numérique sur la valeur de résistance interne de la cellule, si, si les conditions décrites ci-dessous sont vérifiées :

• Variation en valeur absolue du niveau de courant entre deux itérations du calcul $|I_{bat,k+1} - I_{bat,k}|$ supérieure à un seuil.
• Température minimale sur l'ensemble des modules supérieure ou égale à un seuil.
• Etat de charge de la batterie supérieur à un certain niveau.

L'unité de commande électronique peut ainsi comprendre un second calculateur configuré pour calculer la valeur de la résistance interne pour chaque cellule en fonction de l'historique du courant traversant la batterie et de l'historique de la tension mesurée aux bornes de la cellule.

De manière préférentielle, la batterie comprend plusieurs capteurs de tension aptes à mesurer chacun la tension aux bornes d'une cellule différente, et l'unité de commande électronique est configurée pour calculer une puissance maximale admissible par la batterie comme un minimum entre les puissances maximales admissibles de chaque cellule équipée d'un voltmètre, multiplié par un coefficient de cellule constant. La valeur du coefficient de cellule peut dépendre du nombre de cellules de la batterie ainsi que la connexion des cellules entre elles au sein de la batterie. Le coefficient de cellule peut par exemple correspondre au nombre total de cellules dans le cas où toutes les cellules sont montées en série, ou correspondre au nombre de cellules multiplié par deux dans le cas où la batterie comprend un assemblage en série de groupes de deux cellules élémentaires montées en parallèle.

La seconde puissance est par exemple le produit de la première tension seuil constante par la somme du courant de batterie et d'un quotient dans lequel la différence entre la première tension seuil et la tension aux bornes de la cellule, est divisée par la résistance interne de la cellule.

Selon un mode de réalisation préférentiel, on substitue à la valeur de résistance interne de la cellule, pour le calcul de la seconde puissance, une valeur sécurisée de résistance interne obtenue en multipliant la résistance issue de la cartographie par un coefficient de sécurité strictement supérieur à 1.

La première puissance est par exemple le produit :

- de l'inverse du carré de la somme de la résistance interne de la cellule et d'un facteur de pente positif constant ;
- du courant de batterie multiplié par la résistance interne de la cellule, auquel on ajoute une seconde tension seuil et on retranche la tension aux bornes de la cellule ;
- de la seconde tension seuil multipliée par la résistance de la cellule, terme auquel on ajoute la tension aux bornes de la cellule multipliée par le facteur de pente et auquel on retranche le courant de batterie multiplié par la résistance interne de la cellule et multiplié par le facteur de pente.

La première tension seuil, la seconde tension seuil et le facteur de pente sont des valeurs constantes enregistrées dans l'unité de commande électronique.

On peut substituer à la valeur de résistance interne de la cellule, pour le calcul de la première puissance, une valeur sécurisée de résistance interne obtenue en multipliant la résistance issue de la cartographie par un second coefficient de sécurité strictement supérieur à 1. Selon un mode de réalisation préféré, le coefficient de sécurité est de préférence compris entre 1,3 et 1,6. De manière avantageuse, le premier et le second coefficient de sécurité peuvent être égaux. Selon un autre mode de réalisation possible, le premier et le second coefficient de sécurité peuvent être différents, tous deux supérieurs à 1, et de préférence inférieurs ou égaux à 1,5.

De préférence, la batterie est équipée de plusieurs capteurs de température, et l'unité de commande électronique est configurée pour lire les résistances internes des différentes cellules en utilisant une valeur de température qui est une valeur minimale parmi plusieurs températures issues de différents capteurs. L'unité de commande électronique peut être configurée pour lire les résistances internes des différentes cellules en utilisant une valeur de température qui est une valeur minimale parmi plusieurs températures issues de différents capteurs et en utilisant l'état de charge ("SOC") de la cellule. La température utilisée peut par exemple être le minimum des températures mesurées par les différents capteurs, ou être le minimum des températures mesurées par plusieurs capteurs se trouvant à proximité de la cellule considérée.

Selon une variante de réalisation améliorée, l'unité de commande électronique est configurée pour calculer la puissance maximale admissible associée à la cellule, en prenant le minimum d'au moins trois valeurs, dont la seconde puissance, la première puissance, et une troisième puissance, la troisième puissance étant le produit

- de l'inverse du carré de la somme de la résistance interne de la cellule et d'un second facteur de pente positif constant, différent du premier facteur de pente ;
- du courant de batterie multiplié par la résistance interne de la cellule, auquel on ajoute une troisième tension seuil et on retranche la tension aux bornes de la cellule ;
- de la troisième tension seuil multipliée par la résistance de la cellule de la batterie, terme auquel on ajoute la tension aux bornes de la cellule multipliée par le second facteur de pente et auquel on retranche le courant de batterie multiplié par la résistance interne de la cellule et multiplié par le second facteur de pente.

Selon un autre aspect, l'invention propose un procédé de régulation des phases de recharge d'une batterie électrique, dans lequel on limite la puissance électrique envoyée vers la batterie en vue de son rechargement, en calculant une puissance maximale admissible par la batterie, comme un multiple d'une puissance maximale admissible associée à une cellule de la batterie, la puissance maximale associée à la cellule étant calculée en prenant le minimum d'au moins deux valeurs, dont une seconde puissance et une première puissance, la seconde puissance correspondant à la puissance absorbée par la cellule si on augmente sa tension jusqu'à atteindre une première tension seuil constante, et la première puissance correspondant à la puissance absorbée par la cellule si on augmente sa tension et l'intensité de charge de la batterie jusqu'à croiser une courbe intensité-tension qui est strictement décroissante en fonction de l'intensité traversant la batterie.

De manière préférentielle, on utilise, pour calculer la première et la première puissance, une valeur de résistance interne de la cellule qui est lue dans une cartographie en fonction d'un état de charge et d'une température.

Avantageusement, on calcule la puissance maximale associée à plusieurs cellules, et on calcule la puissance maximale admissible par la batterie comme un multiple du minimum des puissances maximales associées aux différentes cellules.

D'autres buts, caractéristiques et avantages de l'invention apparaîtront à la lecture de la description suivante, donnée uniquement à titre d'exemple non limitatif et faite en référence aux dessins annexés sur lesquels :

- la figure 1 représente un ensemble électromoteur selon l'invention,
- les figures 2 et 3 illustrent des graphes de positionnement du point de fonctionnement (courant, tension) d'une batterie appartenant à l'ensemble électromoteur de la figure 1, par rapport à différents critères de surveillance, et
- la figure 4 illustre certains aspects du fonctionnement d'une unité de commande électronique appartenant à l'ensemble électromoteur de la figure 1.

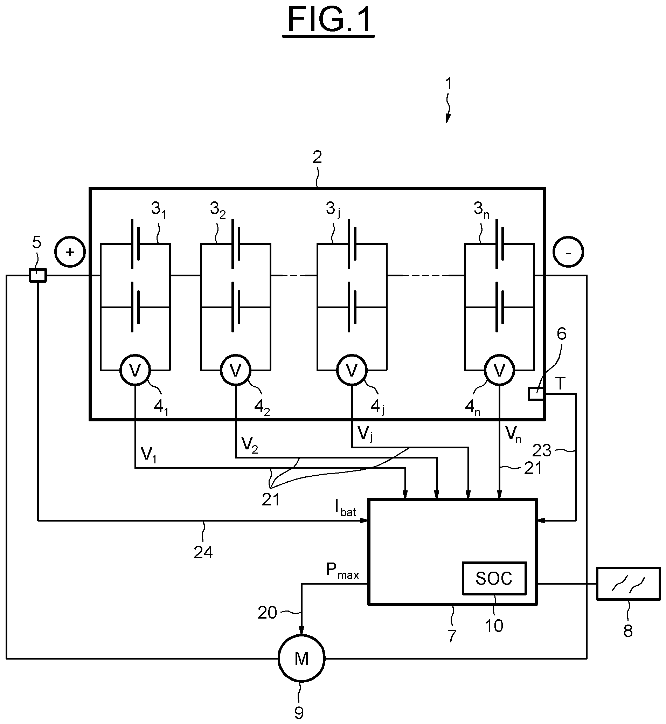

Tel qu'illustré sur la figure 1, un ensemble d'électromoteur 1 comprend une batterie 2, un moteur électrique 9 et une unité de commande électronique 7. La batterie est équipée d'un ampèremètre 5 permettant de mesurer l'intensité du courant $I_{bat}(t)$ traversant la batterie à un instant "t" et relié à l'unité de commande électronique 7 par une connexion 24. La batterie est également équipée d'un ou plusieurs capteurs de température 6 permettant de mesurer une température T et relié(s) à l'unité de commande électronique 7 par une connexion 23. La batterie comprend des cellules $3_1$, $3_2$...$3_j$...$3_n$ montées en série les unes par rapport aux autres et des capteurs de tension ou voltmètres $4_1$, $4_2$...$4_j$...$4_n$ permettant de mesurer la tension respectivement $V_1(t)$, $V_2(t)$...$V_j(t)$... $V_n(t)$, aux bornes de chaque cellule $3_1$, $3_2$...$3_j$...$3_n$.

Chaque cellule $3_1$, $3_2$...$3_j$...$3_n$ peut être constituée de plusieurs cellules élémentaires montées en parallèle, par exemple, sur la figure 1 constituée de deux cellules élémentaires montées en parallèle.

L'unité de commande électronique 7 comprend un calculateur 10 apte à calculer l'état de charge de chaque cellule en fonction par exemple de son historique de température, de courant et de tension. Les méthodes de calcul d'état de charge d'une cellule ou d'une batterie d'accumulateur sont connues. On peut par exemple utiliser la méthode décrite dans l'article "Extended Kalman filtering for battery management systems of LiPB-based HEV battery packs. Part 3. State and paramameter estimation"(Gregory L Plett), Journal of power sources 134 pp277-292. L'unité de commande électronique 7 comprend également, ou est reliée à, une cartographie 8 dans laquelle elle peut lire, en fonction d'une température et d'un état de charge, une valeur de résistance interne pour chaque cellule $3_1$, $3_2$... $3_j$... $3_n$.

L'unité de commande électronique 7 délivre par une connexion 20 une valeur $P_{max}$ de puissance maximale autorisée pour le rechargement de la batterie.

Par exemple, la valeur $P_{max}$ peut être envoyée vers un gestionnaire des phases de freinage récupératif qui, dès que la puissance délivrée par le moteur 9 approche le seuil autorisé, complète le freinage par les moyens de freinage dissipatifs du véhicule (plaquettes, disques de freinage).

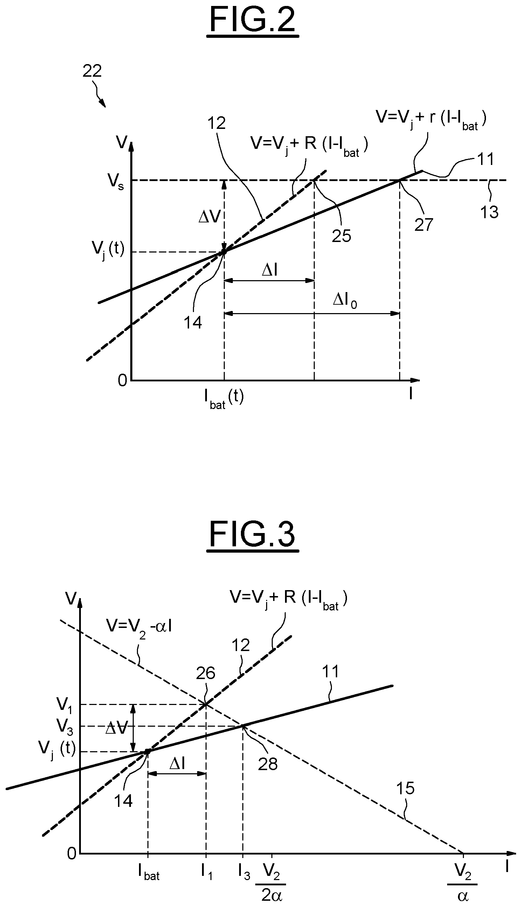

La figure 2 illustre le principe du calcul d'un point seuil de fonctionnement 25 que l'on autorise une cellule $3_j$ à atteindre pour ne pas dépasser un premier seuil d'endommagement, qui est ici une tension seuil constante $V_s$.

On trouve ainsi, sur la figure 2, une droite 11 passant par le point 14 de fonctionnement courant $(I_{bat}(t), V_j(t))$ de la cellule, et ayant pour pente la résistance r interne de la cellule. Pour respecter le seuil de tension $V_s$, on peut augmenter le courant $I_{bat}(t)$ et la tension $V_j(t)$ jusqu'à atteindre le point de fonctionnement 27 où la droite 11 rencontre l'horizontale 13 associée au seuil $V_s$. Les incréments de tension et de courant autorisés sont alors respectivement $\Delta V$ et $\Delta I_0$.

Afin de prendre une marge de sécurité et pour tenir compte des incertitudes de calcul sur la résistance interne r, on préfère prendre comme point de fonctionnement limite autorisé, un point 25 correspondant à l'intersection d'une droite 12 passant par le point de fonctionnement 14 et correspondant à une résistance interne R légèrement supérieure à la résistance interne cartographiée r. Les incréments de tension et de courant autorisés sont alors respectivement $\Delta V$ et $\Delta I < \Delta I_0$.

On peut par exemple choisir R = k.r, k étant un coefficient de sécurité strictement supérieur à 1, et de préférence inférieur ou égal à 1,5.

La puissance maximale $P_{max\,j1}$ acceptable par la cellule j suivant ce premier critère est alors égale à :

$$P_{\max j1} = V_s \left\{ I_{bat}(t) + \frac{V_s - V_j(t)}{R} \right\} \qquad \text{Equation (1)}$$

La figure 3 illustre le principe du calcul d'un autre point de fonctionnement limite, autorisé cette fois pour éviter la formation de dépôts métalliques -généralement sous forme de dendrites de lithium-sur l'électrode négative de la cellule.

Ne disposant pas de l'information du potentiel d'électrode négative par rapport à une électrode de référence, on fixe un seuil de fonctionnement sous forme d'une courbe décroissante de tension en fonction du courant, seuil illustré ici par une droite 15 ayant comme ordonnée à l'origine une tension $V_2$ et ayant une pente négative de valeur absolue $\alpha$. Le courant et la tension de la cellule peuvent alors être augmentés à partir du courant $I_{bat}(t)$ de la tension $V_j(t)$ correspondant au point de fonctionnement 14, jusqu'à un point 28 de coordonnées $(I_3, V_3)$ .correspondant à l'intersection de la droite seuil 15, et de la droite 11 ayant pour pente la résistance interne r de la cellule. Comme dans le cas de la figure 2, on prend par sécurité, plutôt que le point 28, un point 26 de coordonnées ($I_1$, $V_1$) correspondant à l'intersection de la droite seuil 15 avec la droite 12 correspondant à une droite de fonctionnement "à résistance majorée R" de la cellule $3_j$. Les incréments de tension et de courant autorisés sont alors respectivement un nouvel incrément de tension $\Delta V$ et un nouvel incrément d'intensité de courant $\Delta I$, différents de ceux de la figure 2.

Les coordonnées ($I_1$, $V_1$) du point d'intersection 26, sont obtenues à l'aide des équations des deux droites 15 et 12, selon les équations suivantes :

$$V_2 - \alpha I_1 = V_j(t) + R(I_1 - I_{bat}(t)) \qquad \text{Equation (2)}$$

$$(R + \alpha)I_1 = V_2 - V_j(t) + RI_{bat}(t) \qquad \text{Equation (3)}$$

$$I_1 = \frac{V_2 - V_j(t) + RI_{bat}(t)}{R + \alpha} \qquad \text{Equation (4)}$$

$$V_1 = V_2 - \alpha I_1 = \frac{(R + \alpha)V_2 - \alpha V_2 + \alpha V_j(t) - R\alpha I_{bat}(t)}{R + \alpha} \qquad \text{Equation (4)}$$

$$V_1 = \frac{RV_2 + \alpha V_j(t) - R\alpha I_{bat}(t)}{R + \alpha} \qquad \text{Equation (5)}$$

$$P_{\max j2} = I_1 x V_1$$
$$= \frac{1}{(R + \alpha)^2}(V_2 - V_j(t) + RI_{bat}(t))((R + \alpha)V_2 - \alpha V_2 + \alpha V_j(t) - R\alpha I_{bat}(t))$$

$$\text{Equation (6)}$$

La puissance $P_{maxj2}$ correspondant au point d'intersection 26 est inférieure à une puissance $P'_{maxj2}$ correspondant au point d'intersection 28, notamment si l'intensité $I_2$ est inférieure à $V_2/2\alpha$. Dans ce cas, le choix d'utiliser une résistance R surévaluée par rapport à la résistance r cartographiée, va dans le sens de la sécurité. C'est le cas avec les valeurs usuelles, par exemple $V_2$ de l'ordre de 4V, $\alpha$ de l'ordre de 0.0025Volt.$A^{-1}$ et une valeur maximale de courant de batterie de l'ordre de 60A. On a alors largement $I_{bat}$ <60A< $V_2/2\alpha$=800A.

Lorsque la courbe seuil délimitant le domaine où l'on peut utiliser la batterie sans engendrer de dépôt de lithium, est une fonction non linéaire, on peut approximer cette fonction par plusieurs portions de droite 15 définies par des abscisses à l'origine $V_2$ différentes, et des pentes $\alpha$ différentes. On calcule alors la puissance maximale autorisée pour la cellule, correspondant à l'intersection de la droite 12 avec chacune des droites seuils ainsi définies, et on prend le minimum de ces différentes puissances ainsi que de la puissance $P_{maxj1}$.

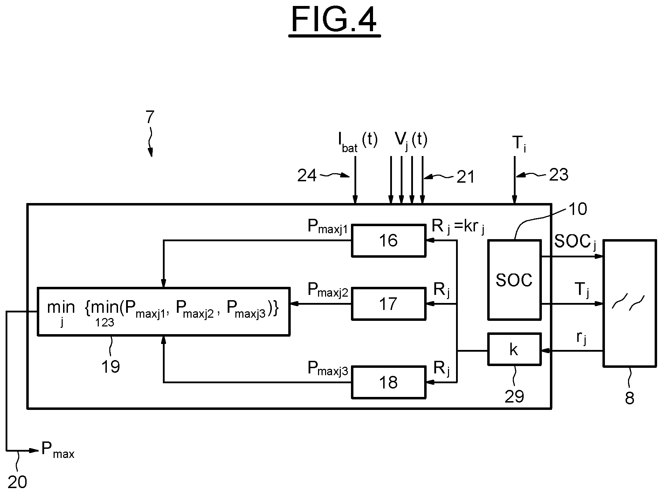

La figure 4 illustre une partie du fonctionnement de l'unité de commande électronique 7 permettant de délivrer la valeur maximale de puissance $P_{max}$ autorisée pour le rechargement de la batterie 2 de la figure 1.

L'unité de commande électronique 7 reçoit en entrée le courant de batterie $I_{bat}(t)$ mesuré par l'ampèremètre 5, les différentes tensions $V_j(t)$ délivrées par les différents voltmètres $4_1$, $4_2$, $4_j$, $4_n$ associés aux cellules $3_1$, $3_2$, $3_j$, $3_n$.

L'unité de commande électronique 7 reçoit une ou plusieurs valeurs de température $T_i$ par des connexions 23 correspondant à des températures en différents endroits de la batterie. Le calculateur d'état de charge 10 calcule pour chacune des cellules $3_1$, $3_2$, $3_j$, $3_n$ son état de charge $SOC_j$, envoie cette valeur vers la cartographie 8 associée à une température $T_j$ calculée à partir des températures $T_i$ pour, correspondre à une température plus proche de la cellule et/ou correspondre à une température minimale estimée au voisinage de la cellule. En fonction de ces deux données, l'unité de commande électronique 7 lit dans la cartographie 8, une valeur $r_j$ correspondant à une résistance interne estimée de la cellule $3_j$. Elle envoie cette valeur $r_j$, vers un multiplicateur 29 qui multiplie la résistance $r_j$, par un coefficient de sécurité k pour obtenir une résistance majorée $R_j$. La résistance majorée $R_j$ est ensuite envoyée par l'unité de commande électronique vers un premier, un second, et un troisième calculateurs de puissance maximale autorisée, respectivement repérés par les références 16, 17 et 18.

Le calculateur 16 calcule la puissance maximale autorisée pour la cellule j afin de ne pas dépasser le seuil de tension $V_S$ tel qu'exposé dans la description de la figure 2.

Le calculateur 17 calcule une puissance maximale autorisée pour la cellule $3_j$ pour que celle-ci ne donne pas lieu à un dépôt de dendrite sur la base d'une courbe seuil correspondant à la droite 15 illustrée en figure 3.

Le troisième calculateur 18 calcule une puissance maximale autorisée pour la cellule $3_j$ calculée selon le même principe que la puissance maximale autorisée $P_{maxj2}$, mais associée à une droite 15 d'équation différente de la droite 15 illustrée en figure 3.

Les trois valeurs $P_{maxj1}$, $P_{maxj2}$, $P_{maxj3}$, pour chaque valeur de j comprise entre 1 et n, sont envoyées vers un sélecteur de minimas 19, qui sélectionne la valeur minimale des 3 x n valeurs de puissance ainsi calculées.

Cette valeur minimale correspond à la plus faible puissance qu'une des cellules de la batterie 2 est capable d'accepter, tout en satisfaisant les trois critères correspondant à la droite seuil 13, à une première droite seuil 15, et à une seconde droite seuil 15 de pente différente de la première droite seuil 15, et d'abscisse à l'origine différente de la première droite seuil 15. La valeur de puissance maximale acceptée par la batterie peut alors être déduite de la puissance minimale parmi les 3n valeurs calculées précédemment, en multipliant cette valeur minimale par le nombre n de cellules.

En utilisant le procédé selon l'invention, il est ainsi possible d'estimer d'une manière fiable, la puissance maximale qu'il est possible d'envoyer vers la batterie sans engendrer une dégradation prématurée de celle-ci. Le procédé selon l'invention peut être utilisé pour prendre en compte des domaines de fonctionnement limités par une droite ou un groupe de droites autres que les droites associées à des seuil de formation de dépôt de lithium métallique, à la place, ou en sus, des droites de seuils de formation de dépôts de lithium métallique.

L'invention ne se limite pas aux exemples de réalisation décrits et peut se décliner en de nombreuses variantes. La batterie pourrait être équipée d'un seul capteur de température, chaque cellule pourrait être équipée d'un capteur de température, ou la batterie pourrait être équipée d'un nombre de capteurs de température inférieur au nombre de cellules. Dans ce dernier cas, la température retenue pour le calcul de la résistance interne de la batterie peut correspondre soit à un minimum de température sur tous les capteurs, soit à un minimum local de température sur les capteurs les plus proches de la cellule considérée, soit à une température estimée du coeur de cellule à partir des autres mesures de température. D'autres choix des arbitrages entre les différentes valeurs de température sont également possibles. Dans une version on peut ne calculer qu'un état de charge global pour la batterie, et affecter la même valeur de résistance interne de cellule à chacune des cellules, à partir de cet état de charge moyen.

La limitation de la puissance envoyée vers la batterie selon l'invention peut être mise en oeuvre pendant toutes les phases de recharge de la batterie, ou peut être mise en oeuvre de manière sélective pour certaines des phases de recharge de la batterie, par exemple pendant les phases de freinage récupératif.

Les calculateurs de puissance maximale 17 et 18 peuvent être remplacés par un calculateur de puissance maximale apte à déterminer directement l'intersection de la droite de fonctionnement 12 avec une courbe non linéaire délimitant le domaine autorisé de fonctionnement de la batterie sans formation de dendrites.

Le coefficient de sécurité k peut être différent pour le calcul de la puissance $P_{maxj1}$, et pour et le calcul des puissances maximales $P_{maxj2}$ et $P_{maxj3}$.

La batterie pourrait être constituée de cellule en séries constituées chacune d'une seule cellule élémentaire ou constituée au contraire, d'au moins deux cellules élémentaires en parallèle.

## Revendications

1. Système (1) d'alimentation électrique, notamment pour véhicule automobile, comprenant une batterie (2) d'accumulation électrique, la batterie (2) étant composée d'une ou plusieurs cellules ($3_1$, $3_2$, $3_j$, $3_n$), la batterie étant équipée d'un ampèremètre (5) apte à mesurer le courant ($I_{bat}$) traversant la batterie (2), et d'au moins un voltmètre ($4_1$, $4_2$, $4_j$, $4_n$) apte à mesurer la tension aux bornes d'une cellule ($3_1$, $3_2$, $3_j$, $3_n$), le système d'alimentation comprenant une unité de commande électronique (7) apte à calculer une puissance électrique maximale ($P_{max}$) admissible par la batterie lors d'une phase de recharge, l'unité de commande (7) étant configurée pour calculer cette puissance comme un multiple d'une puissance maximale admissible par une cellule équipée d'un voltmètre, en imposant une tension maximale entre les bornes de la cellule, cette tension étant une fonction décroissante de l'intensité traversant la cellule, le système étant **caractérisé en ce que** l'unité de commande est configurée pour calculer une puissance maximale admissible associée à une cellule équipée d'un voltmètre en imposant que cette puissance soit inférieure ou égale une première puissance ($P_{maxj2}$), la première puissance ($P_{maxj2}$) étant le produit d'une première fonction

linéaire par rapport au courant de batterie ($I_{bat}$) et par rapport à la tension ($V_j$) aux bornes de la cellule ($3_j$), et d'une seconde fonction linéaire par rapport au courant de batterie et par rapport à la tension aux bornes de la cellule.

2. Système (1) d'alimentation électrique selon la revendication 1, dans lequel l'unité de commande (7) est en outre configurée pour calculer une puissance maximale admissible associée à une cellule équipée d'un voltmètre en imposant que cette puissance soit inférieure ou égale à une seconde puissance ($P_{maxj1}$) qui est le produit d'une première tension seuil constante ($V_s$) par la somme du courant de batterie ($I_{bat}$) et d'un terme qui est fonction de la tension aux bornes ($V_j$) de la cellule.

3. Système d'alimentation selon l'une des revendications précédentes, dans lequel l'unité de commande électronique (7) comprend un calculateur (10) d'état de charge apte à calculer un état de charge ($SOC_j$) de la cellule, et comprend une cartographie (8) permettant de lire, à partir d'une température ($T_j$) et de l'état de charge ($SOC_j$) de la cellule ($3_j$), une résistance interne ($r_j$) de la cellule, le terme s'ajoutant au courant ($I_{bat}$) de batterie pour le calcul de la première puissance ($P_{maxj1}$) étant inversement proportionnel à la résistance interne ($r_j$) de la cellule, et dans les coefficients de la première et de la seconde fonction linéaire étant des fonctions de la résistance interne ($r_j$) de la cellule.

4. Système d'alimentation selon l'une des revendications précédentes, dans lequel la batterie(2) comprend plusieurs capteurs de tension ($4_1$, $4_2$, $4_j$, $4_n$) aptes à mesurer chacun la tension aux bornes d'une cellule ($3_1$, $3_2$, $3_j$, $3_n$), différente, et dans lequel l'unité de commande électronique (7) est configurée pour calculer une puissance maximale admissible par la batterie comme un minimum entre les puissances maximales admissibles de chaque cellule équipée d'un voltmètre, multiplié par un coefficient de cellule constant.

5. Système d'alimentation selon l'une des revendications 3 ou 4, dans lequel la seconde puissance ($P_{maxj1}$) est le produit de la première tension seuil constante ($V_s$) par la somme du courant de batterie ($I_{bat}$) et d'un quotient dans lequel la différence entre la première tension seuil ($V_s$) et la tension aux bornes de la cellule ($V_j$), est divisée par la résistance interne ($r_j$) de la cellule.

6. Système d'alimentation selon la revendication 5, dans lequel on substitue à la valeur ($r_j$) de résistance interne de la cellule, pour le calcul de la première puissance, une valeur sécurisée ($R_j$) de résistance interne obtenue en multipliant la résistance ($r_j$) issue de la cartographie (8) par un coefficient de sécurité (k) strictement supérieur à 1.

7. Système d'alimentation selon l'une des revendications 3 à 6, dans lequel la première puissance ($P_{maxj2}$) est le produit :

   - de l'inverse du carré de la somme de la résistance interne ($r_j$) de la cellule et d'un facteur de pente ($\alpha$) positif constant ;
   - du courant de batterie ($I_{bat}$) multiplié par la résistance interne ($r_j$) de la cellule, auquel on ajoute une seconde tension seuil ($V_2$) et on retranche la tension ($V_j$) aux bornes de la cellule ;
   - de la seconde tension seuil ($V_2$) multipliée par la résistance ($r_j$) de la cellule, terme auquel on ajoute la tension ($V_j$) aux bornes de la cellule multipliée par le facteur de pente ($\alpha$) et auquel on retranche le courant de batterie ($I_{bat}$) multiplié par la résistance interne de la cellule ($r_j$) et multiplié par le facteur de pente ($\alpha$).

8. Système d'alimentation selon la revendication 7, dans lequel on substitue à la valeur ($r_j$) de résistance interne de la cellule, pour le calcul de la première puissance, une valeur sécurisée ($R_j$) de résistance interne obtenue en multipliant la résistance ($r_j$) issue de la cartographie (8) par un second coefficient de sécurité (k) strictement supérieur à 1.

9. Système d'alimentation selon l'une des revendications 3 à 8, dans lequel la batterie (2) est équipée de plusieurs capteurs de température (6), et dans lequel l'unité de commande électronique (7) est configurée pour lire les résistances internes ($r_j$) des différentes cellules ($3_1$, $3_2$, $3_j$, $3_n$) en utilisant une valeur de température ($T_j$) qui est une valeur minimale parmi plusieurs températures ($T_i$) issues de différents capteurs.

10. Système d'alimentation selon la revendication 8, dans lequel l'unité de commande électronique (7) est configurée pour calculer la puissance maximale admissible associée à la cellule en prenant le minimum d'au moins trois valeurs, dont la première puissance ($P_{maxj2}$), la seconde puissance ($P_{maxj1}$), et une troisième puissance ($P_{maxj3}$), la troisième puissance étant le produit des trois termes suivants:

   - l'inverse du carré de la somme de la résistance interne ($r_j$) de la cellule et d'un second facteur de pente positif constant, différent du premier facteur de pente ;
- le courant de batterie ($I_{bat}$) multiplié par la résistance interne de la cellule ($r_j$), auquel on ajoute une troisième tension seuil et on retranche la tension ($V_j$) aux bornes de la cellule ;
- la troisième tension seuil multipliée par la résistance ($r_j$) de la cellule, terme auquel on ajoute la tension ($V_j$) aux bornes de la cellule multipliée par le second facteur de pente et auquel on retranche le courant de batterie ($I_{bat}$) multiplié par la résistance ($r_j$) interne de la cellule et multiplié par le second facteur de pente.

11. Procédé de régulation des phases de recharge d'une batterie électrique (7), dans lequel on limite la puissance électrique envoyée vers la batterie en vue de son rechargement en calculant une puissance maximale admissible par la batterie comme un multiple d'une puissance maximale admissible associée à une cellule de la batterie, **caractérisé en ce que** la puissance maximale associée à la cellule est calculée en prenant le minimum d'au moins deux valeurs, dont une première puissance ($P_{maxj2}$) et une seconde puissance ($P_{maxj1}$), la seconde puissance ($P_{maxj1}$) correspondant à la puissance absorbée par la cellule si on augmente la tension ($V_j$) entre ses bornes jusqu'à atteindre une première tension seuil ($V_s$) constante, et la première puissance ($P_{maxj2}$) correspondant à la puissance absorbée par la cellule si on augmente la tension ($V_j$) entre ses bornes et/ou l'intensité de la batterie ($I_{bat}$) jusqu'à croiser une courbe (15) intensité-tension qui est strictement décroissante en fonction de l'intensité ($I_{bat}$) traversant la batterie.

12. Procédé de régulation selon la revendication 11, dans lequel on utilise, pour calculer la première et la seconde puissances ($P_{maxj2}$, $P_{maxj1}$), une valeur de résistance interne ($r_j$) de la cellule qui est lue dans une cartographie (8) en fonction d'un état de charge ($SOC_j$) et d'une température ($T_j$).

13. Procédé selon les revendications 11 à 12, dans lequel on calcule la puissance maximale associée à plusieurs cellules, et on calcule la puissance maximale admissible par la batterie comme un multiple du minimum des puissances maximales associées aux différentes cellules ($3_1$, $3_2$, $3_j$, $3_n$).

14. Système d'alimentation selon les revendications 3, 6, 8, 9, dans lequel l'unité de commande électronique (7) comprend en outre un second calculateur configuré pour calculer la valeur de la résistance interne pour chaque cellule ($3_1$, $3_2$,... $3_j$, $3_n$) en fonction de l'historique du courant traversant la batterie et de l'historique de la tension mesurée aux bornes de la cellule.

**Patentansprüche**

1. Stromversorgungssystem (1), insbesondere für ein Kraftfahrzeug, das eine Stromspeicherbatterie (2) enthält, wobei die Batterie (2) aus einer oder mehreren Zellen ($3_1$, $3_2$, $3_j$, $3_n$) zusammengesetzt ist, wobei die Batterie mit einem Amperemeter (5), das den die Batterie (2) durchfließenden Strom ($I_{bat}$) messen kann, und mit mindestens einem Voltmeter ($4_1$, $4_2$, $4_j$, $4_n$) ausgerüstet ist, das die Spannung an den Klemmen einer Zelle ($3_1$, $3_2$, $3_j$, $3_n$) messen kann, wobei das Versorgungssystem eine elektronische Steuereinheit (7) enthält, die eine maximale elektrische Leistung ($P_{max}$) berechnen kann, die für die Batterie in einer Aufladephase zulässig ist, wobei die Steuereinheit (7) konfiguriert ist, diese Leistung als ein Vielfaches einer maximal für eine mit einem Voltmeter ausgerüsteten Zelle zulässigen Leistung zu berechnen, indem eine maximale Spannung zwischen den Klemmen der Zelle vorgegeben wird, wobei diese Spannung eine abnehmende Funktion der die Zelle durchfließenden Stromstärke ist, wobei System **dadurch gekennzeichnet ist, dass** die Steuereinheit konfiguriert ist, eine zulässige maximale Leistung zu berechnen, die einer mit einem Voltmeter ausgerüsteten Zelle zugeordnet ist, indem vorgegeben wird, dass diese Leistung niedriger als oder gleich einer ersten Leistung ($P_{maxj2}$) ist, wobei die erste Leistung ($P_{maxj2}$) das Produkt aus einer ersten linearen Funktion bezüglich des Batteriestroms ($I_{bat}$) und bezüglich der Spannung ($V_j$) an den Klemmen der Zelle (3j) und einer zweiten linearen Funktion bezüglich des Batteriestroms und bezüglich der Spannung an den Klemmen der Zelle ist.

2. Stromversorgungssystem (1) nach Anspruch 1, wobei die Steuereinheit (7) außerdem konfiguriert ist, eine einer mit einem Voltmeter ausgerüsteten Zelle zugeordnete zulässige maximale Leistung zu berechnen, indem vorgegeben wird, dass diese Leistung niedriger als eine oder gleich einer zweiten Leistung ($P_{maxj1}$) ist, die das Produkt aus einer ersten konstanten Schwellenspannung ($V_s$) und der Summe des Batteriestroms ($I_{bat}$) und eines Terms ist, der von der Spannung an den Klemmen ($V_j$) der Zelle abhängt.

3. Versorgungssystem nach einem der vorhergehenden Ansprüche, wobei die elektronische Steuereinheit (7) einen Ladezustandsrechner (10) enthält, der einen Ladezustand ($SOC_j$) der Zelle berechnen kann, und ein Kennfeld (8) enthält, das es ermöglicht, ausgehend von einer Temperatur ($T_j$) und vom Ladezustand ($SOC_j$) der Zelle ($3_j$) einen inneren Widerstand ($r_j$) der Zelle abzulesen, wobei der Term, der zum Batteriestrom ($I_{bat}$) zur Berechnung der ersten Leistung ($P_{maxj1}$) hinzugefügt wird, zum inneren Widerstand ($r_j$) der Zelle umgekehrt proportional ist, und in den Koeffizienten der ersten und der zweiten linearen Funktion Funktionen des inneren Widerstands ($r_j$) der Zelle sind.

4. Versorgungssystem nach einem der vorhergehenden Ansprüche, wobei die Batterie (2) mehrere Spannungssensoren ($4_1$, $4_2$, $4_j$, $4_n$) enthält, die je die Spannung an den Klemmen einer unterschiedlichen Zelle ($3_1$, $3_2$, $3_j$, $3_n$) messen können, und wobei die elektronische Steuereinheit (7) konfiguriert ist, eine zulässige maximale Leistung durch die Batterie als ein Minimum zwischen den zulässigen maximalen Leistungen jeder mit einem Voltmeter ausgerüsteten Zelle multipliziert mit einem konstanten Zellenkoeffizienten zu berechnen.

5. Versorgungssystem nach einem der Ansprüche 3 oder 4, wobei die zweite Leistung ($P_{maxj1}$) das Produkt aus der ersten konstanten Schwellenspannung ($V_s$) und der Summe des Batteriestroms ($I_{bat}$) und einem Quotienten ist, wobei die Differenz zwischen der ersten Schwellenspannung ($V_s$) und der Spannung ($V_j$) an den Klemmen der Zelle durch den inneren Widerstand ($r_j$) der Zelle dividiert wird.

6. Versorgungssystem nach Anspruch 5, wobei der Wert ($r_j$) des inneren Widerstands der Zelle für die Berechnung der ersten Leistung durch einen gesicherten Wert ($R_j$) des inneren Widerstands ersetzt wird, der durch Multiplizieren des vom Kennfeld (8) stammenden Widerstands ($r_j$) mit einem Sicherheitskoeffizienten (k) unbedingt größer als 1 erhalten wird.

7. Versorgungssystem nach einem der Ansprüche 3 bis 6, wobei die erste Leistung ($P_{maxj2}$) das Produkt ist aus:

- dem Umkehrwert des Quadrats der Summe des inneren Widerstands ($r_j$) der Zelle und eines konstanten positiven Neigungsfaktors ($\alpha$);
- dem Batteriestrom ($I_{bat}$) multipliziert mit dem inneren Widerstand ($r_j$) der Zelle, dem eine zweite Schwellenspannung ($V_2$) hinzugefügt und von dem die Spannung ($V_j$) an Klemmen der Zelle abgezogen wird;
- der zweiten Schwellenspannung ($V_2$) multipliziert mit dem Widerstand ($r_j$) der Zelle, Term, dem die Spannung ($V_j$) an Klemmen der Zelle multipliziert mit dem Neigungsfaktor ($\alpha$) hinzugefügt wird, und von dem der Batteriestrom ($I_{bat}$) multipliziert mit dem inneren Widerstand ($r_j$) der Zelle und multipliziert mit dem Neigungsfaktor ($\alpha$) abgezogen wird.

8. Versorgungssystem nach Anspruch 7, wobei der Wert ($r_j$) des inneren Widerstands der Zelle für die Berechnung der ersten Leistung durch einen gesicherten Wert ($R_j$) des inneren Widerstands ersetzt wird, der durch Multiplizieren des vom Kennfeld (8) stammenden Widerstands ($r_j$) mit einem zweiten Sicherheitskoeffizienten (k) unbedingt größer als 1 erhalten wird.

9. Versorgungssystem nach einem der Ansprüche 3 bis 8, wobei die Batterie (2) mit mehreren Temperatursensoren (6) ausgerüstet ist, und wobei die elektronische Steuereinheit (7) konfiguriert ist, die inneren Widerstände ($r_j$) der verschiedenen Zellen ($3_1$, $3_2$, $3_j$, $3_n$) unter Verwendung eines Temperaturwerts ($T_j$) zu lesen, der ein Mindestwert unter mehreren von verschiedenen Sensoren stammenden Temperaturen ($T_i$) ist.

10. Versorgungssystem nach Anspruch 8, wobei die elektronische Steuereinheit (7) konfiguriert ist, die der Zelle zugeordnete zulässige maximale Leistung zu berechnen, indem das Minimum von mindestens drei Werten genommen wird, darunter die erste Leistung ($P_{maxj2}$), die zweite Leistung ($P_{maxj1}$) und eine dritte Leistung ($P_{maxj3}$), wobei die dritte Leistung das Produkt aus den drei folgenden Termen ist:

- dem Umkehrwert des Quadrats der Summe des inneren Widerstands ($r_j$) der Zelle und eines zweiten konstanten positiven Neigungsfaktors, der sich vom ersten Neigungsfaktor unterscheidet;
- dem Batteriestrom ($I_{bat}$) multipliziert mit dem inneren Widerstand ($r_j$) der Zelle, dem eine dritte Schwellenspannung hinzugefügt und von dem die Spannung ($V_j$) an den Klemmen der Zelle abgezogen wird;
- der dritten Schwellenspannung multipliziert mit dem Widerstand ($r_j$) der Zelle, Term, dem die Spannung ($V_j$) an den Klemmen der Zelle multipliziert mit dem zweiten Neigungsfaktor hinzugefügt wird und von dem der Batteriestrom ($I_{bat}$) multipliziert mit dem inneren Widerstand ($r_j$) der Zelle und multipliziert mit dem zweiten Neigungsfaktor abgezogen wird.

11. Verfahren zur Regelung der Ladephasen einer elektrischen Batterie (7), wobei die an die Batterie für ihr Aufladen geschickte elektrische Leistung begrenzt wird, indem eine zulässige maximale Leistung durch die Batterie als ein Vielfaches einer einer Zelle der Batterie zugeordneten zulässigen maximalen Leistung berechnet wird, **dadurch gekennzeichnet, dass** die der Zelle zugeordnete maximale Leistung berechnet wird, indem das Minimum von mindestens zwei Werten genommen wird, darunter eine erste Leistung ($P_{maxj2}$) und eine zweite Leistung ($_{Pmaxj1}$), wobei die zweite Leistung ($P_{maxj1}$) der von der Zelle absorbierten Leistung entspricht, wenn die Spannung ($V_j$) zwischen ihren Klemmen erhöht wird, bis sie eine erste konstante Schwellenspannung ($V_s$) erreicht, und die erste Leistung ($P_{maxj2}$) der von der Zelle absorbierten Leistung entspricht, wenn die Spannung ($V_j$) zwischen ihren Klemmen und/oder die Stromstärke der Batterie ($I_{bat}$) erhöht werden, bis sie eine Kurve (15) Stromstärke-Spannung kreuzen, die abhängig von der die Batterie durchfließenden Stromstärke ($I_{bat}$) unbedingt abnehmend ist.

**12.** Regelungsverfahren nach Anspruch 11, wobei zur Berechnung der ersten und der zweiten Leistung ($P_{maxj2}$, $P_{maxj1}$) ein Wert des inneren Widerstands ($r_j$) der Zelle verwendet wird, der in einem Kennfeld (8) abhängig von einem Ladezustand ($SOC_j$) und von einer Temperatur ($T_j$) gelesen wird.

**13.** Verfahren nach den Ansprüchen 11 bis 12, wobei die mehreren Zellen zugeordnete maximale Leistung berechnet wird, und die zulässige maximale Leistung durch die Batterie als ein Vielfaches des Minimums der den verschiedenen Zellen ($3_1$, $3_2$, $3_j$, $3_n$) zugeordneten maximalen Leistungen berechnet wird.

**14.** Versorgungssystem nach den Ansprüchen 3, 6, 8, 9, wobei die elektronische Steuereinheit (7) außerdem einen zweiten Rechner enthält, der konfiguriert ist, den Wert des inneren Widerstands für jede Zelle ($3_1$, $3_2$, ..., $3_j$, $3_n$) abhängig vom Verlauf des die Batterie durchfließenden Stroms und vom Verlauf der an den Klemmen der Zelle gemessenen Spannung zu berechnen.

## Claims

**1.** Electrical power supply system (1), notably for a motor vehicle, comprising an electrical accumulation battery (2), the battery (2) being made up of one or more cells ($3_1$, $3_2$, $3_j$, $3_n$), the battery being equipped with an ammeter (5) suitable for measuring the current ($I_{bat}$) passing through the battery (2), and at least one voltmeter ($4_1$, $4_2$, $4_j$, $4_n$) suitable for measuring the voltage at the terminals of a cell ($3_1$, $3_2$, $3_j$, $3_n$), the power supply system comprising an electronic control unit (7) suitable for computing a maximum electrical power ($P_{max}$) that can be accepted by the battery during a recharging phase, the control unit (7) being configured to compute this power as a multiple of a maximum power that can be accepted by a cell equipped with a voltmeter, by imposing a maximum voltage between the terminals of the cell, this voltage being a decreasing function of the intensity passing through the cell, the system being **characterized in that** the control unit is configured to compute a maximum acceptable power associated with a cell equipped with a voltmeter by dictating that this power be less than or equal to a first power ($P_{maxj2}$), the first power ($P_{maxj2}$) being the product of a first linear function relative to the battery current ($I_{bat}$) and relative to the voltage ($V_j$) at the terminals of the cell ($3_j$), and a second linear function relative to the battery current and relative to the voltage at the terminals of the cell.

**2.** Electrical power supply system (1) according to Claim 1, in which the control unit (7) is also configured to compute a maximum acceptable power associated with a cell equipped with a voltmeter by dictating that this power be less than or equal to a second power ($P_{maxj1}$) which is the product of a first constant threshold voltage ($V_s$) by the sum of the battery current ($I_{bat}$) and of a term which is a function of the voltage at the terminals ($V_j$) of the cell.

**3.** Power supply system according to one of the preceding claims, in which the electronic control unit (7) comprises a state-of-charge computer (10) suitable for computing a state of charge ($SOC_j$) of the cell, and comprises a mapping (8) that makes it possible to read, from a temperature ($T_j$) and from the state of charge ($SOC_j$) of the cell ($3_j$), an internal resistance ($r_j$) of the cell, the term being added to the battery current ($I_{bat}$) for the computation of the first power ($P_{maxj1}$) being inversely proportional to the internal resistance ($r_j$) of the cell, and in the coefficients of the first and of the second linear function being functions of the internal resistance ($r_j$) of the cell.

**4.** Power supply system according to one of the preceding claims, in which the battery (2) comprises a number of voltage sensors ($4_1$, $4_2$, $4_j$, $4_n$) each suitable for measuring the voltage at the terminals of a different cell ($3_1$, $3_2$, $3_j$, $3_n$), and in which the electronic control unit (7) is configured to compute a maximum power that is acceptable by the battery as a minimum between the maximum acceptable powers of each cell equipped with a voltmeter, multiplied by a constant cell coefficient.

**5.** Power supply system according to one of Claims 3 or 4, in which the second power ($P_{maxj1}$) is the product of the first constant threshold voltage ($V_s$) by the sum of the battery current ($I_{bat}$) and of a quotient in which the difference between the first threshold voltage ($V_s$) and the voltage at the terminals of the cell ($V_j$) is divided by the internal resistance ($r_j$) of the cell.

6. Power supply system according to Claim 5, in which the internal resistance value ($r_j$) of the cell is replaced, for the computation of the first power, by a secured internal resistance value ($R_j$) obtained by multiplying the resistance ($r_j$) derived from the mapping (8) by a safety coefficient (k) strictly greater than 1.

7. Power supply system according to one of Claims 3 to 6, in which the first power ($P_{maxj2}$) is the product:

   - of the inverse of the square of the sum of the internal resistance ($r_j$) of the cell and of a constant positive slope factor ($\alpha$);
   - of the battery current ($I_{bat}$) multiplied by the internal resistance ($r_j$) of the cell, to which is added a second threshold voltage ($V_2$) and from which is subtracted the voltage ($V_j$) at the terminals of the cell;
   - of the second threshold voltage ($V_2$) multiplied by the resistance ($r_j$) of the cell, a term to which is added the voltage ($V_j$) at the terminals of the cell multiplied by the slope factor ($\alpha$) and from which is subtracted the battery current ($I_{bat}$) multiplied by the internal resistance of the cell ($r_j$) and multiplied by the slope factor ($\alpha$).

8. Power supply system according to Claim 7, in which the internal resistance value ($r_j$) of the cell is replaced, for the computation of the first power, by a secured internal resistance value ($R_j$) obtained by multiplying the resistance ($r_j$) derived from the mapping (8) by a second safety coefficient (k) strictly greater than 1.

9. Power supply system according to one of Claims 3 to 8, in which the battery (2) is equipped with a number of temperature sensors (6), and in which the electronic control unit (7) is configured to read the internal resistances ($r_j$) of the different cells ($3_1$, $3_2$, $3_j$, $3_n$) by using a temperature value ($T_j$) which is a minimum value out of a plurality of temperatures ($T_i$) obtained from different sensors.

10. Power supply system according to Claim 8, in which the electronic control unit (7) is configured to compute the maximum acceptable power associated with the cell by taking the minimum of at least three values, namely the first power ($P_{maxj2}$), the second power ($P_{maxj1}$), and a third power ($P_{maxj3}$), the third power being the product of the following three terms:

   - the inverse of the square of the sum of the internal resistance ($r_j$) of the cell and of a second constant positive slope factor, different from the first slope factor;
   - the battery current ($I_{bat}$) multiplied by the internal resistance of the cell ($r_j$), to which is added a third threshold voltage and from which is subtracted the voltage ($V_j$) at the terminals of the cell;
   - the third threshold voltage multiplied by the resistance ($r_j$) of the cell, a term to which is added the voltage ($V_j$) at the terminals of the cell multiplied by the second slope factor and from which is subtracted the battery current ($I_{bat}$) multiplied by the internal resistance ($r_j$) of the cell and multiplied by the second slope factor.

11. Method for regulating the recharging phases of an electrical battery (7), in which the electrical power sent to the battery in order to recharge it is limited by computing a maximum power that is acceptable by the battery as a multiple of a maximum acceptable power associated with a cell of the battery, **characterized in that** the maximum power associated with the cell is computed by taking the minimum of at least two values, namely a first power ($P_{maxj2}$) and a second power ($P_{maxj1}$), the second power ($P_{maxj1}$) corresponding to the power absorbed by the cell if the voltage ($V_j$) between its terminals is increased until it reaches a first constant threshold voltage ($V_s$), and the first power ($P_{maxj2}$) corresponding to the power absorbed by the cell if the voltage ($V_j$) between its terminals and/or the intensity of the battery ($I_{bat}$) is increased until it crosses an intensity-voltage curve (15) which is strictly decreasing as a function of the current intensity ($I_{bat}$) passing through the battery.

12. Regulation method according to Claim 11, in which, an internal resistance value ($r_j$) of the cell, which is read in a mapping (8) as a function of a state of charge ($SOC_j$) and of a temperature ($T_j$), is used to compute the first and the second powers ($P_{maxj2}$, $P_{maxj1}$).

13. Method according to Claims 11 to 12, in which the maximum power associated with a number of cells is computed, and the maximum power acceptable by the battery is computed as a multiple of the minimum of the maximum powers associated with the different cells ($3_1$, $3_2$, $3_j$, $3_n$).

**14.** Power supply system according to Claims 3, 6, 8, 9, in which the electronic control unit (7) further comprises a second computer configured to compute the value of the internal resistance for each cell ($3_1$, $3_2$,... $3_j$, $3_n$) as a function of the history of the current passing through the battery and of the history of the voltage measured at the terminals of the cell.

# FIG.1

## FIG.2

## FIG.3

# FIG.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008040893 A
- WO 2009036444 A
- US 7683579 B2
- EP 1798100 A2

**Littérature non-brevet citée dans la description**

- **GREGORY L PLETT.** Extended Kalman filtering for battery management systems of LiPB-based HEV battery packs. Part 3. State and paramameter estimation. *Journal of power sources,* vol. 134, 277-292